# EUROPEAN PATENT APPLICATION

(11) **EP 4 170 401 A1**
(43) Date of publication of application: **26.04.2023**
(21) Application number: 21837399.1
(22) Date of filing: 18.05.2021
(51) Int. Cl.: G02B 6/44

(54) **RESIN COMPOSITION, OPTICAL FIBER SECONDARY COATING MATERIAL, OPTICAL FIBER, AND OPTICAL FIBER PRODUCTION METHOD**

(30) Priority: 09.07.2020 JP 2020118433
(71) Applicant: SUMITOMO ELECTRIC INDUSTRIES, LTD., Osaka-shi, Osaka 541-0041 (JP)
(72) Inventor: HAMAKUBO Katsushi, Osaka-shi, Osaka 541-0041 (JP); FUJII Takashi, Osaka-shi, Osaka 541-0041 (JP)
(74) Representative: Hoffmann Eitle
(86) International application number: PCT/JP2021/018824
(87) International publication number: WO 2022/009529

(57) **Abstract**

The present disclosure relates to a resin composition for optical fiber coating, containing a photopolymerizable compound containing urethane (meth)acrylate, a photopolymerization initiator and an anti-static material, wherein a cured product of the resin composition has a surface resistivity ρs of 10¹⁵ Ω or less.

## Description

### Technical Field

The present disclosure relates to a resin composition, an optical fiber secondary coating material, an optical fiber, and an optical fiber production method. Priority is claimed on Japanese Patent Application No. 2020-118433, filed July 9, 2020, the content of which is incorporated herein by reference.

### Background Art

Generally, an optical fiber has a coating resin layer for protecting a glass fiber which is an optical transmission component. For example, the coating resin layer is composed of a primary resin layer and a secondary resin layer. If the optical fiber is electrically charged, it is likely to break due to adhesion of foreign matter and thus winding defects are likely to occur when the optical fiber is wound around the bobbin. Since optical fibers are easily charged, a static eliminator is used to wind optical fibers (for example, refer to Patent Literature 1).

### Citation List

### Patent Literature

[Patent Literature 1] Japanese Unexamined Patent Application, First Publication No. 2013-18562

### Summary of Invention

A resin composition according to one aspect of the present disclosure is a resin composition for optical fiber coating, comprising a photopolymerizable compound containing urethane (meth)acrylate, a photopolymerization initiator and an anti-static material, wherein a cured product of the resin composition has a surface resistivity ρs of 10¹⁵ Ω or less.

### Brief Description of Drawings

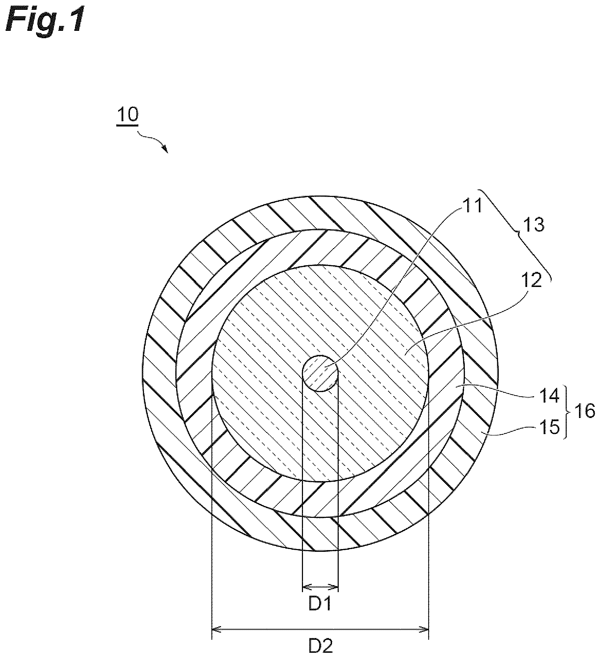

FIG. 1 is a schematic cross-sectional view showing an example of an optical fiber according to the present embodiment.

### Mode for Carrying Out the Invention

### [Problems to be Solved by the Present Disclosure]

In order to prevent winding defects of optical fibers, it is necessary to install static eliminators at several locations, which increases costs such as facility costs and maintenance costs. Therefore, optical fibers are required to be resistant to electrostatic charging and it is required to minimize disconnection due to adhesion of foreign matter.

An object of the present disclosure is to provide a resin composition for optical fiber coating which allows electrostatic charging of an optical fiber to be reduced and disconnection due to adhesion of foreign matter and the like to be reduced. An object of the present disclosure is to provide an optical fiber secondary coating material, an optical fiber, and an optical fiber production method.

### [Effects of Present Disclosure]

According to the present disclosure, it is possible to provide a resin composition for optical fiber coating which allows electrostatic charging of an optical fiber to be reduced and disconnection due to adhesion of foreign matter and the like to be reduced. In addition, according to the present disclosure, it is possible to provide an optical fiber secondary coating material, an optical fiber, and an optical fiber production method.

### [Description of Embodiments of the Present Disclosure]

First, the contents of embodiments of the present disclosure will be listed and described. The resin composition according to one aspect of the present disclosure is a resin composition for optical fiber coating, comprising a photopolymerizable compound containing urethane (meth)acrylate, a photopolymerization initiator and an anti-static material, wherein a cured product of the resin composition has a surface resistivity ρs of 10¹⁵ Ω or less.

When such a composition is used, it is possible to reduce electrostatic charging of the optical fiber and to reduce disconnection of the optical fiber due to adhesion of foreign matter and the like.

In one aspect, the Young's modulus of the cured product of the resin composition at 23°C may be 1,000 MPa or more and 3,000 MPa or less. Thereby, the cured product of the resin composition has appropriate strength and toughness, and thus it becomes easier to reduce disconnection of the optical fiber.

In one aspect, the anti-static material may contain at least one carbon nanotube selected from the group consisting of single-walled carbon nanotubes, double-walled carbon nanotubes and multi-walled carbon nanotubes. When these carbon nanotubes are used, it becomes easier to reduce electrostatic charging of the optical fiber.

In one aspect, the content of the anti-static material with respect to 100 parts by mass of the photopolymerizable compound may be 0.001 parts by mass or more and 1 part by mass or less. Thereby, it is easier to obtain the antistatic effect and easier to secure the strength.

In one aspect, the average diameter of the carbon nanotubes may be 1 nm or more and 5 nm or less, and the average length of the carbon nanotubes may be 50 µm or more and 700 µm or less. When such carbon nanotubes are used, it becomes easy to obtain an antistatic effect with a small amount.

An optical fiber secondary coating material according to one aspect of the present disclosure comprises the above resin composition. When a secondary resin layer is formed using the above resin composition, an optical fiber having excellent antistatic properties can be obtained.

An optical fiber according to one aspect of the present disclosure is an optical fiber comprising a glass fiber containing a core and a clad, and a coating resin layer that covers the outer circumference of the glass fiber, wherein the coating resin layer comprises a primary resin layer that is in contact with the glass fiber and covers the glass fiber, and a secondary resin layer that covers the outer circumference of the primary resin layer, and the secondary resin layer consists of a cured product of the resin composition. Such an optical fiber has excellent antistatic properties.

An optical fiber production method according to one aspect of the present disclosure comprises a coating process in which the resin composition is applied to the outer circumference of a glass fiber containing a core and a clad and a curing process in which ultraviolet rays are emitted after the coating process and the resin composition is cured. Thereby, an optical fiber having excellent antistatic properties can be produced.

### [Details of Embodiments of the Present Disclosure]

Specific examples of a resin composition and an optical fiber according to the present embodiment will be described with reference to the drawings as necessary. Here, the present disclosure is not limited to such examples, and includes the scope described in the claims, equivalents to the scope of the claims, and all modifications within the scope. In the following description, the same components in the description of the drawings will be denoted with the same reference numerals and redundant descriptions will be omitted.

### <Resin composition>

A resin composition contains a base resin comprising a photopolymerizable compound and a photopolymerization initiator, and an anti-static material.

### (Base resin)

The base resin can comprise a photopolymerizable compound containing oligomers containing urethane (meth)acrylate and monomers, and a photopolymerization initiator. Here, (meth)acrylate means an acrylate or a methacrylate corresponding thereto. The same applies to (meth)acrylic acid and the like.

As the urethane (meth)acrylate, an oligomer obtained by reacting a polyol compound, a polyisocyanate compound and a hydroxyl group-containing (meth)acrylate compound can be used.

Examples of polyol compounds include polytetramethylene glycol, polypropylene glycol and a bisphenol A/ethylene oxide addition diols. Examples of polyisocyanate compounds include 2,4-tolylene diisocyanate, 2,6-tolylene diisocyanate, isophorone diisocyanate and dicyclohexylmethane 4,4'-diisocyanate. Examples of hydroxy group-containing (meth)acrylate compounds include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate and tripropylene glycol mono(meth)acrylate.

In order to easily adjust the Young's modulus after curing, the number average molecular weight of the polyol compound may be 400 or more and 1,000 or less.

An organotin compound is generally used as a catalyst when urethane (meth)acrylate is synthesized. Examples of organotin compounds include dibutyltin dilaurate, dibutyltin diacetate, dibutyltin malate, dibutyltinbis(2-ethylhexyl mercaptoacetate), dibutyltinbis(isooctyl mercaptoacetate) and dibutyltin oxide. In consideration of ease of availability or catalytic performance, it is preferable to use dibutyltin dilaurate or dibutyltin diacetate as a catalyst.

When urethane (meth)acrylate is synthesized, a lower alcohol having 5 or less carbon atoms may be used. Examples of lower alcohols include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol and 2,2-dimethyl-1-propanol.

The oligomer may further contain an epoxy (meth)acrylate in order to easily obtain antistatic properties of the optical fiber. As the epoxy (meth)acrylate, an oligomer obtained by reacting an epoxy resin having two or more glycidyl groups with a compound having a (meth)acryloyl group can be used. As the epoxy (meth)acrylate, for example, a bisphenol A type epoxy (meth)acrylate can be used.

In order to increase the toughness of the optical fiber, the content of the epoxy (meth)acrylate based on a total amount of oligomers and monomers is preferably 10 mass% or more and 55 mass% or less, more preferably 15 mass% or more and 50 mass% or less, and still more preferably 20 mass% or more and 45 mass% or less.

As the monomer, at least one selected from the group consisting of monofunctional monomers having one polymerizable group and multifunctional monomers having two or more polymerizable groups can be used. A mixture of two or more monomers may be used.

Examples of monofunctional monomers include (meth)acrylate monomers such as methyl (meth)acrylate, ethyl (meth)acrylate, propyl (meth)acrylate, n-butyl (meth)acrylate, s-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 2-phenoxyethyl (meth)acrylate, 3-phenoxybenzyl acrylate, phenoxydiethylene glycol acrylate, phenoxy polyethylene glycol acrylate, 4-tert-butylcyclohexanol acrylate, tetrahydrofurfuryl (meth)acrylate, benzyl (meth)acrylate, dicyclopentenyl (meth)acrylate, dicyclopentenyl oxyethyl (meth)acrylate, dicyclopentenyl (meth)acrylate, nonylphenol polyethylene glycol (meth)acrylate, nonylphenol EO-modified (meth)acrylate, nonylphenoxy polyethylene glycol (meth)acrylate, and isobomyl (meth)acrylate; carboxylic group-containing monomers such as (meth)acrylic acid, (meth)acrylic acid dimer, carboxyethyl (meth)acrylate, carboxypentyl (meth)acrylate, and ω-carboxy-polycaprolactone (meth)acrylate; heterocyclic ring-containing monomers such as N-(meth)acryloyl morpholine, N-vinylpyrrolidone, N-vinyl caprolactam, N-(meth)acryloyl piperidine, N-(meth) acryloylpyrrolidine, 3-(3-pyridine)propyl (meth)acrylate, and cyclic trimethylolpropane formal acrylate; maleimide monomers such as maleimide, N-cyclohexyl maleimide, and N-phenylmaleimide; N-substituted amide monomers such as (meth)acrylamide, N,N-dimethyl (meth)acrylamide, N,N-diethyl (meth)acrylamide, N-hexyl (meth)acrylamide, N-methyl (meth)acrylamide, N-butyl (meth)acrylamide, N-methylol (meth)acrylamide, and N-methylolpropane (meth)acrylamide; aminoalkyl (meth)acrylate monomers such as aminoethyl (meth)acrylate, aminopropyl (meth)acrylate, N,N-dimethylaminoethyl (meth)acrylate, and tert-butylaminoethyl (meth)acrylate; and succinimide monomers such as N-(meth)acryloyl oxymethylene succinimide, N-(meth)acryloyl-6-oxyhexamethylene succinimide, and N-(meth)acryloyl-8-oxyoctamethylene succinimide.

Examples of multifunctional monomers include monomers having two polymerizable groups such as ethylene glycol di(meth)acrylate, polyethylene glycol di(meth)acrylate, polypropylene glycol di(meth)acrylate, neopentyl glycol di(meth)acrylate, tripropylene glycol di(meth)acrylate, a di(meth)acrylate of an alkylene oxide adduct of bisphenol A, tetraethylene glycol di(meth)acrylate, neopentyl glycol hydroxypivalate di(meth)acrylate, 1,4-butanediol di(meth)acrylate, 1,6-hexanediol di(meth)acrylate, 1,9-nonane diol di(meth)acrylate, 1,12-dodecane diol di(meth)acrylate, 1,14-tetradecane diol di(meth)acrylate, 1,16-hexadecane diol di(meth)acrylate, 1,20-eicosandiol di(meth)acrylate, isopentyldiol di(meth)acrylate, 3-ethyl-1,8-octanediol di(meth)acrylate, and a di(meth)acrylate of an EO adduct of bisphenol A; and monomers having three or more polymerizable groups such as trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxypolypropoxy tri(meth)acrylate, tris[(meth)acryloyloxyethyl]isocyanurate, pentaerythritol tri(meth)acrylate, pentaerythritol polyethoxy tetra(meth)acrylate, pentaerythritol polypropoxytetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl]isocyanurate.

In order to increase the Young's modulus of the resin layer, the monomers preferably comprise a multifunctional monomer, and more preferably comprise monomers having two polymerizable groups.

Regarding the photopolymerization initiator, one can be appropriately selected from among known radical photopolymerization initiators and used. Examples of photopolymerization initiators include 1-hydroxycyclohexylphenyl ketone (Omnirad 184, commercially available from IGM Resins), 2,2-dimethoxy-2-phenylacetophenone, 1-(4-isopropylphenyl)-2-hydroxy-2-methylpropan-1-one, bis(2,6-dimethoxybenzoyl)-2,4,4-trimethylpentylphosphine oxide, 2-methyl-1-[4-(methylthio)phenyl]-2-morpholino-propan-1-one (Omnirad 907, commercially available from IGM Resins), 2,4,6-trimethylbenzoyldiphenylphosphine oxide (Omnirad TPO, commercially available from IGM Resins) and bis(2,4,6-trimethylbenzoyl)phenylphosphine oxide (Omnirad 819, commercially available from IGM Resins).

### (Anti-static material)

Examples of anti-static materials include carbon nanotubes, low-molecular-weight surfactants (low-molecular-weight antistatic agents), and conductive polymers (high-molecular-weight antistatic agents). In order to minimize coloration on the optical fibers and easily obtain an antistatic effect with a small amount, the anti-static material may be carbon nanotubes. The carbon nanotubes may comprise at least one carbon nanotube selected from the group consisting of single-walled carbon nanotubes (SWCNT), double-walled carbon nanotubes (DWCNT) and multi-walled carbon nanotubes (MWCNT).

The average diameter of the carbon nanotubes may be 1 nm or more and 5 nm or less. In addition, the average length of the carbon nanotubes may be 50 µm or more and 700 µm or less. Since the carbon nanotubes have such properties, it is easy to obtain an antistatic effect with a small amount. Carbon nanotubes having a small diameter, a large specific surface area, and a long length (high aspect ratio) can be obtained by, for example, a super-growth method. The average diameter of the carbon nanotubes can be measured under a transmission electron microscope (TEM). The average length of the carbon nanotubes can be measured under a scanning electron microscope (SEM), an atomic force microscope (AFM) or the like.

In order to easily obtain an antistatic effect, the content of the anti-static material with respect to 100 parts by mass of the photopolymerizable compound may be 0.001 parts by mass or more, 0.003 parts by mass or more, or 0.005 parts by mass or more. In addition, in order to easily minimize a decrease in strength and scratch resistance, the content of the anti-static material with respect to 100 parts by mass of the photopolymerizable compound may be 1 part by mass or less, 0.5 parts by mass or less, or 0.1 parts by mass or less.

The resin composition may further comprise a silane coupling agent, a leveling agent, an antifoaming agent, an antioxidant, a sensitizer, inorganic oxide particles and the like.

The silane coupling agent is not particularly limited as long as it does not interfere with curing the resin composition. Examples of silane coupling agents include tetramethylsilicate, tetraethylsilicate, mercaptopropyltrimethoxysilane, vinyltrichlorosilane, vinyltriethoxysilane, vinyltris(β-methoxy-ethoxy)silane, β-(3,4-epoxycyclohexyl)-ethyltrimethoxysilane, dimethoxydimethylsilane, diethoxydimethylsilane, 3-acryloxypropyltrimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-γ-aminopropyltrimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl)propyl]tetrasulfide, bis- [3 -(triethoxysilyl)propyl] disulfide, γ-trimethoxysilylpropyl dimethylthiocarbamyltetrasulfide and γ-trimethoxysilylpropylbenzothiadyltetrasulfide.

The inorganic oxide particles are not particularly limited, and particles containing at least one selected from the group consisting of silicon dioxide (silica), zirconium dioxide (zirconia), aluminum oxide (alumina), magnesium oxide (magnesia), titanium oxide (titania), tin oxide and zinc oxide may be used because they have excellent dispersibility in the resin composition and a Young's modulus is easily adjusted.

The surface resistivity ρs of the cured product of the resin composition (that is, it can be said to be substantially the surface resistivity of the secondary resin layer to be described below) is 10¹⁵ Q (Ω/sq. or Ω/□) or less. Accordingly, a sufficient antistatic effect can be obtained and it is thought that electrostatic charging of the optical fiber can be reduced and disconnection of the optical fiber due to adhesion of foreign matter and the like can be minimized. In this regard, the surface resistivity may be 10¹⁴ Ω or less or 10¹³ Ω or less. The lower limit of the surface resistivity can be appropriately adjusted, and may be set to 10⁶ Ω in order to easily minimize a decrease in strength and scratch resistance. The surface resistivity of the cured product of the resin composition can be measured using, for example, a resin film obtained by curing the resin composition with an integrated light intensity of 900 mJ/cm² or more and 1,100 mJ/cm² or less.

The Young's modulus of the cured product of the resin composition (that is, it can be said to be substantially the Young's modulus of the secondary resin layer to be described below) at 23°C may be 1,000 MPa or more and 3,000 MPa or less, 1,200 MPa or more and 2,800 MPa or less, or 1,300 MPa or more and 2,700 MPa or less. If the Young's modulus of the cured product is 1,000 MPa or more, the strength of the optical fiber is easily improved, and if the Young's modulus is 3,000 MPa or less, the optical fiber is unlikely to disconnect because an appropriate toughness can be imparted to the cured product. The Young's modulus of the cured product of the resin composition can be measured using, for example, a resin film obtained by curing the resin composition with an integrated light intensity of 900 mJ/cm² or more and 1,100 mJ/cm² or less. Here, when the Young's modulus is measured using the resin film in this manner, it tends to be slightly higher than the Young's modulus of the secondary resin layer formed from the same resin composition (about 100 MPa higher).

### <Secondary coating material>

The optical fiber secondary coating material contains the above resin composition. When a secondary resin layer is formed using the above resin composition, an optical fiber having excellent antistatic properties can be produced.

### <Optical fiber>

FIG. 1 is a schematic cross-sectional view showing an example of an optical fiber according to the present embodiment. An optical fiber 10 comprises a glass fiber 13 containing a core 11 and a clad 12, and a coating resin layer 16 which is provided on the outer circumference of the glass fiber 13 and comprises a primary resin layer 14 and a secondary resin layer 15.

The clad 12 surrounds the core 11. The core 11 and the clad 12 mainly contain glass such as quartz glass, and for example, quartz glass to which germanium is added or pure quartz glass can be used for the core 11, and pure quartz glass or quartz glass to which fluorine is added can be used for the clad 12.

In FIG. 1, for example, the outer diameter (D2) of the glass fiber 13 is about 100 µm to 125 µm, and the diameter (D1) of the core 11 constituting the glass fiber 13 is about 7 µm to 15 µm. The thickness of the coating resin layer 16 is usually about 22 µm to 70 µm. The thickness of each of the primary resin layer 14 and the secondary resin layer 15 may be about 5 µm to 50 µm.

When the outer diameter (D2) of the glass fiber 13 is about 125 µm, and the thickness of the coating resin layer 16 is 60 µm or more and 70 µm or less, the thickness of each of the primary resin layer 14 and the secondary resin layer 15 may be about 10 µm to 50 µm, and for example, the thickness of the primary resin layer 14 may be 35 µm, and the thickness of the secondary resin layer 15 may be 25 µm. The outer diameter of the optical fiber 10 may be about 245 µm to 265 µm.

When the outer diameter (D2) of the glass fiber 13 is about 125 µm and the thickness of the coating resin layer 16 is 27 µm or more and 48 µm or less, the thickness of each of the primary resin layer 14 and the secondary resin layer 15 may be about 10 µm to 38 µm, and for example, the thickness of the primary resin layer 14 may be 25 µm, and the thickness of the secondary resin layer 15 may be 10 µm. The outer diameter of the optical fiber 10 may be about 179 µm to 221 µm.

When the outer diameter (D2) of the glass fiber 13 is about 100 µm, and the thickness of the coating resin layer 16 is 22 µm or more and 37 µm or less, the thickness of each of the primary resin layer 14 and the secondary resin layer 15 may be about 5 µm to 32 µm, and for example, the thickness of the primary resin layer 14 may be 25 µm, and the thickness of the secondary resin layer 15 may be 10 µm. The outer diameter of the optical fiber 10 may be about 144 µm to 174 µm.

### (Secondary resin layer)

In order to reduce electrostatic charging of the optical fiber and reduce disconnection due to adhesion of foreign matter and the like, the secondary resin layer 15 can be formed by curing the above resin composition comprising a base resin comprising a photopolymerizable compound containing urethane (meth)acrylate and a photopolymerization initiator, and an anti-static material. That is, the secondary resin layer 15 may contain a cured product of the above resin composition comprising a base resin comprising a photopolymerizable compound containing urethane (meth)acrylate and a photopolymerization initiator, and an anti-static material.

The Young's modulus of the secondary resin layer at 23°C may be 1,000 MPa or more and 3,000 MPa or less, 1200 MPa or more and 2,800 MPa or less, or 1,300 MPa or more and 2,700 MPa or less. If the Young's modulus of the secondary resin layer is 1,000 MPa or more, the lateral pressure property is easily improved, and if the Young's modulus is 3,000 MPa or less, disconnection is unlikely to occur because an appropriate toughness can be imparted to the secondary resin layer.

### (Primary resin layer)

The primary resin layer 14 can be formed by, for example, curing a resin composition comprising a photopolymerizable compound containing urethane (meth)acrylate, a photopolymerization initiator and a silane coupling agent. Conventionally known techniques can be used for the resin composition for a primary resin layer. Oligomers containing urethane (meth)acrylate, monomers, a photopolymerization initiator and a silane coupling agent may be appropriately selected from the compounds exemplified for the base resin. However, the resin composition for forming a primary resin layer has a composition different from that of the base resin forming a secondary resin layer.

In order to minimize the occurrence of voids in the optical fiber, the Young's modulus of the primary resin layer at 23°C is preferably 0.04 MPa or more and 1.0 MPa or less, more preferably 0.05 MPa or more and 0.9 MPa or less, and still more preferably 0.05 MPa or more and 0.8 MPa or less.

### <Optical fiber production method>

The optical fiber production method comprises a coating process in which the above resin composition is applied to the outer circumference of a glass fiber containing a core and a clad and a curing process in which the resin composition is cured by emitting ultraviolet rays after the coating process. More specifically, the resin composition for a primary resin layer is applied to the outer circumference of a glass fiber and ultraviolet rays are emitted to form a primary resin layer, and additionally, the resin composition for a secondary resin layer is applied to the outer circumference and ultraviolet rays are emitted to form a secondary resin layer, and thereby an optical fiber can be obtained. Ultraviolet rays can be emitted at an integrated light intensity of 1,000±100 mJ/cm².

### Examples

Hereinafter, the results of evaluation tests using example and comparative examples according to the present disclosure will be shown, and the present disclosure will be described in more detail. Here, the present disclosure is not limited to these examples.

### <Preparation of resin composition for secondary resin layer> (Oligomer)

As oligomers, a urethane acrylate (UA) obtained by reacting polypropylene glycol having a number average molecular weight of 600, 2,4-tolylene diisocyanate and 2-hydroxyethyl acrylate and a bisphenol A type epoxy acrylate (EA) were prepared.

### (Monomer)

As monomers, tripropylene glycol diacrylate (TPGDA) and 2-phenoxyethyl acrylate (PO-A) were prepared.

### (Photopolymerization initiator)

As photopolymerization initiators, 1-hydroxycyclohexyl phenyl ketone (Omnirad 184) and 2,4,6-trimethylbenzoyldiphenylphosphine oxide (Omnirad TPO) were prepared.

### (Anti-static material)

As anti-static materials, powder Carbon nanotubes, single-walled (brand name: Aldrich, commercially available from Sigma-Aldrich, product name), which are single-walled carbon nanotube (SWCNT), were prepared. The SWCNTs were produced by the super-growth method, and had an average diameter of 3 nm to 5 nm and an average length of 300 µm to 500 µm.

### (Preparation of resin composition)

The oligomers, monomers and photopolymerization initiator were mixed to prepare a base resin. Regarding the photopolymerization initiator, with respect to a total amount of 100 parts by mass of the oligomers and the monomers, 1.5 parts by mass of 1-hydroxycyclohexyl phenyl ketone and 1.5 parts by mass of 2,4,6-trimethylbenzoyldiphenylphosphine oxide were used. Next, the carbon nanotubes were mixed with the base resin so that the content of the carbon nanotubes was the amount shown in Table 1. Then, most of methanol as a dispersion medium was removed under a reduced pressure to produce a resin composition for a secondary resin layer. Here, the content of methanol remaining in the resin composition was 5 mass% or less.

In Table 1, the amount of oligomers and monomers is the content based on a total amount of oligomers and monomers, and the amount of carbon nanotubes is the amount with respect to 100 parts by mass of the photopolymerizable compound (oligomers and monomers).

### <Preparation of resin composition for primary resin layer>

A urethane acrylate obtained by reacting polypropylene glycol having a number average molecular weight of 4,000, isophorone diisocyanate, 2-hydroxyethyl acrylate and methanol was prepared. 75 parts by mass of the urethane acrylate, 12 parts by mass of nonylphenol EO-modified acrylate, 6 parts by mass of N-vinylcaprolactam, 2 parts by mass of 1,6-hexanediol diacrylate, 1 part by mass of 2,4,6-trimethylbenzoyldiphenylphosphine oxide, and 1 part by mass of γ-mercaptopropyltrimethoxysilane were mixed to obtain a resin composition for a primary resin layer.

### <Production of optical fiber>

The resin composition for a primary resin layer was applied to the outer circumference of a glass fiber composed of a core and a clad and having a diameter of 125 µm, and ultraviolet rays were emitted to form a primary resin layer having a thickness of 20 µm. In addition, the resin composition for a secondary resin layer was applied to the outer circumference, ultraviolet rays were emitted to form a secondary resin layer having a thickness of 15 µm, and thereby an optical fiber was produced. Ultraviolet rays were emitted using an electrodeless UV lamp system ("VPS600 (D valve)," commercially available from Heraeus) under conditions of 1,000±100 mJ/cm². The line speed was 1,500 m/min.

### <Various evaluations>

The following evaluations were performed using the resin compositions and the optical fibers obtained in the examples. The results are shown in Table 1.

### (Measurement of Young's modulus: film Young's modulus)

The resin composition obtained in each example was applied onto a polyethylene terephthalate (PET) film using a spin coater, and then cured using an electrodeless UV lamp system ("VPS600 (D valve)," commercially available from Heraeus) under conditions of 1,000±100 mJ/cm² to form a resin layer having a thickness of 200±20 µm on the PET film. The resin layer was peeled off from the PET film to obtain a resin film (cured product).

The resin film was punched into a JIS K 7127 type 5 dumbbell shape and under conditions of 23±2°C and 50±10%RH, the sample was pulled using a tensile testing machine under conditions of a tensile speed of 1 mm/min and a distance between marked lines of 25 mm, and a stress-strain curve was obtained. Then, the Young's modulus of the resin film was determined by the secant method at 2.5% strain. Measurement was performed 5 times, and the average value thereof was used as the Young's modulus. Here, when the Young's modulus is measured using the resin film in this manner, it tends to be slightly higher than the Young's modulus of the secondary resin layer formed from the same resin composition (about 100 MPa higher).

### (Young's modulus measurement: fiber Young's modulus)

The optical fiber obtained in each example was immerse in a solvent in which acetone and ethanol were mixed and only the coating resin layer was cut out into a cylindrical shape. Next, the solvent was removed by vacuum dry, and the sample was then left in a constant temperature chamber maintained at 23±2°C and 50±10%RH for 16 hours or more, and then pulled using a tensile testing machine under conditions of a tensile speed of 1 mm/min and a distance between marked lines of 25 mm, and a stress-strain curve was obtained. Then, the Young's modulus of the coating resin layer was determined by the secant method at 2.5% strain. Measurement was performed 5 times, and the average value thereof was used as the Young's modulus. Here, the Young's modulus obtained accordingly can be substantially regarded as the Young's modulus of the secondary resin layer.

### (Measurement of surface resistivity)

In the same procedures as in the above "Measurement of Young's modulus: film Young's modulus," a resin film (cured product) was obtained from the resin composition obtained in each example. This film was cut out to 10 cm×10 cm to prepare a measurement sample. Then, the surface resistivity was measured using the following devices and conditions.

### Measurement method: 3-terminal method

Measurement device: Ultra High Resistance/Micro Current Meter R8340 (commercially available from Advantest Co., Ltd.) and Resistivity Chamber 120704A (commercially available from ADC Corporation)
Applied voltage: DC 500 V
Charging time: 1 minute
Measurement atmosphere: in air
Measurement temperature and humidity: 21°C, 34%RH to 35%RH Electrode size: electrode 1 having a diameter of 5.0 cm, and electrode 2 having an inner diameter of 7.0 cm
Number of measurements n: 3

### (Presence of disconnection)

When the optical fiber was drawn at 1,500 m/min, when the fiber was drawn 200 km without disconnection, it was evaluated as "A" and when the fiber was disconnected, it was evaluated as "B."

**[Table 1]**

| | | Example 1 | Example 2 | Example 3 | Example 4 | Example 5 | Example 6 | Example 7 | Comparative Example 1 |
|---|---|---|---|---|---|---|---|---|---|
| Oligomer (mass%) | UA | 20 | 20 | 20 | 20 | 20 | 20 | 20 | 20 |
| | EA | 45 | 45 | 45 | 45 | 45 | 45 | 45 | 45 |
| Monomer (mass%) | PO-A | 20 | 20 | 20 | 20 | 20 | 20 | 20 | 20 |
| | TPGDA | 15 | 15 | 15 | 15 | 15 | 15 | 15 | 15 |
| Antistatic material (parts by mass) | SWCNT | 0.005 | 0.008 | 0.010 | 0.015 | 0.020 | 0.050 | 0.100 | - |
| Film Young's modulus (MPa) | | 1,900 | 1,900 | 1,900 | 1,900 | 1,900 | 1,900 | 1,900 | 1,900 |
| Fiber Young's modulus (MPa) | | 1,800 | 1,800 | 1,800 | 1,800 | 1,800 | 1,800 | 1,800 | 1,800 |
| Surface resistivity ρs (Ω) | | 6×10¹² | 26×10¹¹ | 1.0×10¹⁰ | 1.0×10⁹ | 5.0×10⁸ | 1.5×10⁷ | 5.0×10⁶ | 3.0×10¹⁶ |
| Presence of disconnection | | A | A | A | A | A | A | A | B |

### Reference Signs List

10 Optical fiber
11 Core
12 Clad
13 Glass fiber
14 Primary resin layer
15 Secondary resin layer
16 Coating resin layer

## Claims

1. A resin composition for optical fiber coating, comprising
a photopolymerizable compound containing urethane (meth)acrylate, a photopolymerization initiator and an anti-static material,
wherein a cured product of the resin composition has a surface resistivity ρs of 10¹⁵ Ω or less.

2. The resin composition according to claim 1,
wherein the cured product has a Young's modulus at 23°C of 1,000 MPa or more and 3,000 MPa or less.

3. The resin composition according to claim 1 or 2,
wherein the anti-static material comprises at least one carbon nanotube selected from the group consisting of single-walled carbon nanotubes, double-walled carbon nanotubes and multi-walled carbon nanotubes.

4. The resin composition according to any one of claims 1 to 3,
wherein a content of the anti-static material with respect to 100 parts by mass of the photopolymerizable compound is 0.001 parts by mass or more and 1 part by mass or less.

5. The resin composition according to claim 3,
wherein the carbon nanotubes have an average diameter of 1 nm or more and 5 nm or less and an average length of 50 µm or more and 700 µm or less.

6. An optical fiber secondary coating material comprising the resin composition according to any one of claims 1 to 4.

7. An optical fiber comprising a glass fiber containing a core and a clad, and a coating resin layer that covers outer circumference of the glass fiber,
wherein the coating resin layer comprises a primary resin layer that is in contact with the glass fiber and covers the glass fiber and a secondary resin layer that covers outer circumference of the primary resin layer, and
wherein the secondary resin layer consists of a cured product of the resin composition according to any one of claims 1 to 5.

8. An optical fiber production method, comprising:
a coating process in which the resin composition according to any one of claims 1 to 5 is applied to outer circumference of a glass fiber containing a core and a clad; and
a curing process in which ultraviolet rays are emitted after the coating process and the resin composition is cured.
